# EUROPEAN PATENT SPECIFICATION

(11) **EP 1 506 674 B1**
(45) Date of publication and mention of the grant of the patent: **18.10.2006**
(21) Application number: 03715281.6
(22) Date of filing: 29.04.2003
(51) Int. Cl.: H04N 7/173, H04N 5/775, H04N 7/10

(54) **CONTROL OF AN AV CONTENT SOURCE COMPONENT BY AN AV CONTENT SINK COMPONENT**
STEUERUNG EINES AV-DATENQUELLEGERÄTS DURCH EIN AV-DATENSENKEGERÄT
COMMANDE D'UN COMPOSANT SOURCE DE CONTENU AUDIOVISUEL PAR UN COMPOSANT RECEPTEUR DE CONTENU AUDIOVISUEL

(30) Priority: 08.05.2002 GB 0210488
(43) Date of publication of application: 16.02.2005
(73) Proprietor: Koninklijke Philips Electronics N.V., 5621 BA Eindhoven (NL)
(72) Inventor: WOOLGAR, David, J., Cross Oak Lane Redhill, Surrey RH1 5HA (GB)
(74) Representative: White, Andrew Gordon
(86) International application number: PCT/IB2003/001747
(87) International publication number: WO 2003/096695

(56) References cited:
- EP-A- 1 176 815
- GB-A- 2 317 762
- US-A- 5 351 096
- US-A- 5 550 642
- US-A- 5 771 329
- US-A- 5 915 206

## Description

The present invention relates to a system for the control of a source component capable of playing out audio-visual (AV) content.

A home entertainment system typically comprises one or more source components, such as a VCR and DVD, able to playout AV content and one or more destination components able to consume AV content, such as a display and audio amplifier. Whilst playing a VCR or DVD in a home entertainment system it is possible a user will temporarily switch to another source of AV content, for example a broadcast TV channel in order to check what show is currently being broadcast. Unless the user pauses the VCR or DVD prior to switching, the VCR or DVD will continue playing and the user, when he/she resumes viewing the VCR or DVD, will have missed some of the action.

US patent 5,550,642 to Thomson Consumer Electronics Inc. discloses a VCR which includes circuitry for controlling a cable converter unit, circuitry for detecting the presence of a television signal and control code transmission circuitry for remotely controlling a cable converter unit. In response to a channel up command received by the VCR, the VCR controls the cable converter unit to select the next channel and the VCR monitors the television signals received from the cable converter unit to ensure that commands sent to the cable converter unit are executed. A disadvantage is that while tuned to another channel, content from the original channel is lost.

One manufacturer arranged for its VCRs to stop playing and to enter 'standby' mode should the VCR detect that it is no longer acting as a source of AV content for a destination component. However if the destination component subsequently again selected the VCR as a source, to resume playout the user had to separately instruct the VCR to exit 'standby' mode and to commence playing.

At the time of filing of the present application, new means of acquiring and storing AV content are emerging; however, the management of these means requires a dedicated user interaction. For example, a Personal Video Recorder (PVR) component is characteristically controlled by the user explicitly asserting and subsequently de-asserting the time-shift feature in order to pause and resume playout of a broadcast TV programme, respectively.

It is an object of the present invention to solve these and other problems by means of an improved system for the control of a source component capable of playing out AV content.

In accordance with the present invention there is provided a system as set out in claim 1.

The system of the invention relies on identifying an association between a source component outputting AV content and a destination component consuming said AV content. The status of this association may be used to generate a corresponding signal. The signal may be communicated to the source component and be used to control the playout of the source component. It will be apparent to the skilled person that many and varied means may be devised to implement the identification and signalling requirements of the method. Identification of the association between source and destination components may be achieved by use of dedicated means or by use of existing means, such as Project50, see below. Communication of the corresponding signal may be achieved by any suitable wired means including, but not limited to, Scart, IEEE1394/HAVi, powerline or Ethernet; or by wireless means including, but not limited to, radio (HiperLan, WiFi, ZigBee) or infrared (RC5/6, pulse position).

One example is a small system comprising one destination component and one source component, such as a TV and VCR combination. A dedicated signal may be communicated from the TV to the VCR to automatically control the playout of the VCR in dependence on the TV being selected, or not, to present AV output from the VCR. Clearly, other source components such as a DVD player may be used in place of the VCR; similarly, an audio amplifier or a recording component may be used in place of the TV. Although such a system is elegant in its simplicity, it may have limitations in that the system may be difficult to expand to include additional source and destination components. Furthermore the system components may need to be customised (for example to incorporate additional interfaces on each component in order to connect the signal). These and similar 'purpose-built' solutions are not favoured commercially since they incur such additional costs and are potentially incompatible with other brands.

A preferred means to implement the identification and signalling requirements of the method may be to utilise the capabilities of existing techniques already implemented within home entertainment system components. One such technique is AV.Link over Scart (Project50). By monitoring Project50 message traffic between components of the system it is possible to identify an association of destination and source components and to determine when the association is active, or not, and to use this information to control the playout of the relevant source component accordingly. In this way systems comprising large numbers of source and destination components may be accommodated.

It should be noted that the present invention avoids any dedicated involvement of the user.

An attractive aspect of the invention is that, instead of communicating the signal to the source component, the signal is instead used to generate one or more commands, which commands are suitable to control the source component. One example may be where the source component is an existing legacy component such as a VCR and the command is an infrared command suitable to control the VCR deck functions, such as <play> or <pause> the action of which is to in effect control the AV playout of the VCR. In this or similar ways, existing legacy components in the field may be controlled according to the method of the invention. Other command formats include, but are not limited to, Project50 messages, IEEE1394/HAVi messages, Ethernet messages, powerline messages, radio messages. Means to communicate commands include wired means including, but not limited to, Scart, IEEE1394/HAVi, Ethernet or powerline; or wireless means including, but not limited to, radio (HiperLan, WiFi, ZigBee) or infrared (RC5/6, pulse position). In general, the method of the invention determines that, in dependence on the signal, the source component is controlled to either suspend or play out AV content.

By the addition of a suitable apparatus an existing home entertainment system may be upgraded to operate according to the method of the invention. The main function of the apparatus is usually to receive the indication signal and thereby generate commands suitable to operate standard (i.e. unmodified) source components, including legacy components. Clearly, the apparatus may be standalone or alternatively may be incorporated within a source or destination component. Within a particular system there may be more than one apparatus and more than one component may incorporate an apparatus. The indication signal may be applied to the apparatus via any suitable medium including wired or wireless as discussed earlier; the signal itself may be in any suitable format including, but not limited to, a Project50 message, an IEEE1394 message, a powerline message, an infrared remote control command associated with the destination component or a radio message. The command may be output from the apparatus via any suitable medium including wired or wireless as discussed earlier; the command itself may be in any suitable format including, but not limited to, a Project50 message, an IEEE1394 message, a powerline message, an infrared remote control command associated with the source component or a radio message. As an alternative the indication signal and command may be respectively applied to and output from the apparatus using Consumer Electronics Control (CEC) messages carried over the High Definition Multimedia Interface (HDMI).

In a further embodiment of the invention there is defined an AV system comprising a player connected to a presentation device by means of a SCART interconnection, the presentation device being operable to :
- generate an AV.link message according to the selection of the SCART interconnection as input of AV content to be presented; and
- send the AV.Link message to the player;
the player being operable to :
- receive the AV.Link message;
- decode the AV.Link message; and
- control the play out of AV content to the presentation device in dependence on the decoded AV. Link message.

In such a system the source component may be controlled by one or more commands issued by the apparatus in dependence on the signal. The signal may be provided by any suitable means including means independent of the components of the system. Preferably, the signal is generated by the destination component.

Further features and advantages will now be described, by way of example only, with reference to the accompanying drawings in which:
Figure 1 shows a flow diagram of a first method to control the playout of a source component according to the teachings of the present invention;
Figure 2 shows a flow diagram of a second method to control a source component by means of an apparatus according to the teachings of the present invention;
Figure 3 shows a schematic diagram of an apparatus embodying the method of Figure 2;
Figure 4 shows a schematic of a first system in which the method of Figure 1 can be practiced;
Figure 5 shows a schematic of a second system, comprising the apparatus of Figure 3, in which the method of Figure 2 can be practiced; and
Figure 6 shows an example embodiment of the system of Figure 5 which employs Project50 messaging.

In the present description the term 'AV content' refers to audio and/or video assets, including, but not limited to, picture, sound, text and graphics supplied via any suitable analogue and/or digital signal encoding formats. The terms 'playing out' and 'playout', refer to the action of outputting at least one stream of AV content from a source component. The term 'source component' refers to any product or component within a home entertainment system which is capable of playing out AV content to another (destination) component. The term 'pausing' means suspending the playout of AV content from a source component; in such a mode the output signal from the source component may still be active, for example in the form of a video freeze-frame image. The term 'legacy component' refers to a home entertainment component already in the field.

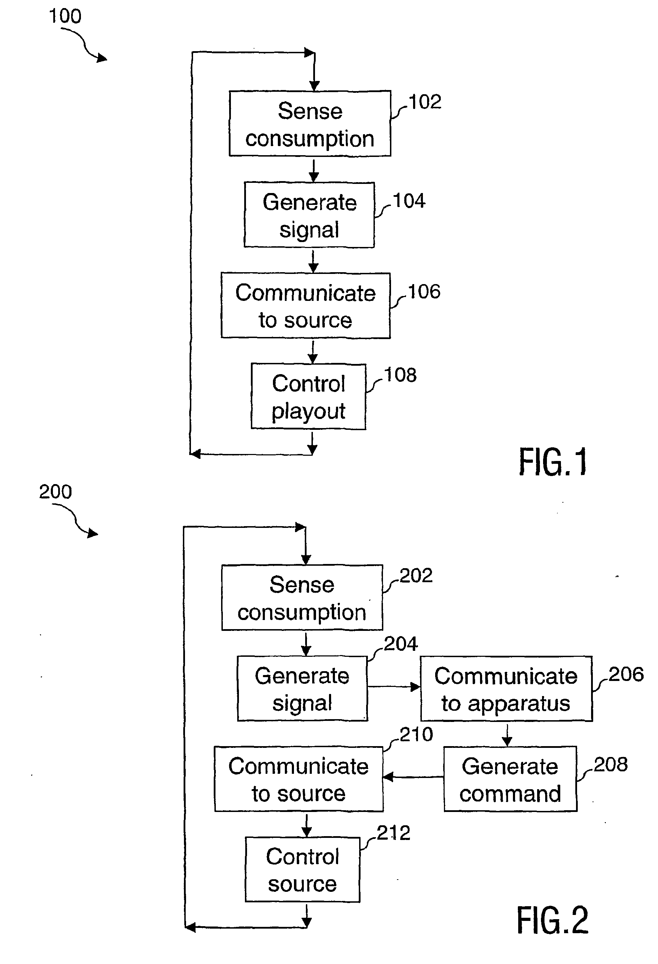

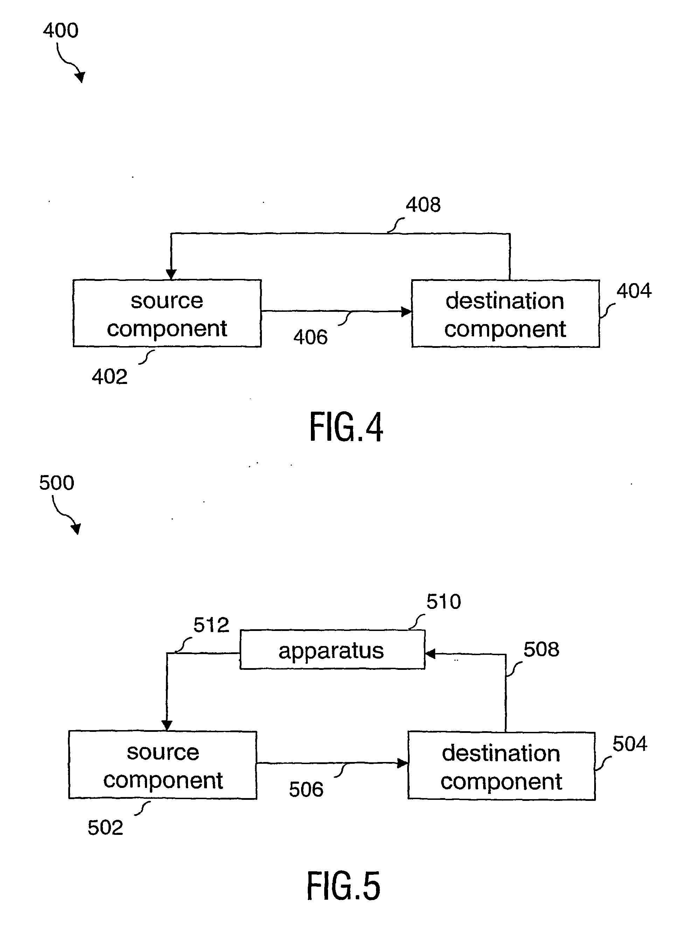

Figure 1 shows a flow diagram of a first method to control the playout of a source component. The method is shown generally at 100 and comprises a continuous loop process. The consumption, or not, of AV content from a source component by a destination component is sensed at 102. A signal is generated 104 in dependence on the result of the sensing. The signal is communicated 106 to the source component. The AV content playout of the source component is controlled 108 in dependence on the signal. The method then loops back to step 102. In this method the signal represents the continuous present status of AV consumption by the destination component. The method is suitable to a system of home entertainment components which are capable of directly interfacing the signal, an example of such an embodiment is described and shown in Figure 4 below.

Figure 2 shows a flow diagram of a second method to control a source component by means of an apparatus. The method is shown generally at 200. As before, the consumption, or not, of AV content from a source component by a destination component is sensed at 202. A signal is generated 204 in dependence on the result of the sensing. The signal is communicated 206 to an apparatus. The apparatus generates 208 at least one command in dependence on the signal. This command is communicated 210 to the source component. The source component, in response to the command, is controlled 212. The method then loops back to step 202. In general, commands issued to the source component place the component in mode <pause> or <play> such that the component suspends or plays out AV content, respectively. In addition, preferably commands are generated by the apparatus only on a 'state change' - that is, when there is a cessation or resumption in consumption of AV content from the source component by the destination component (as indicated by the signal).

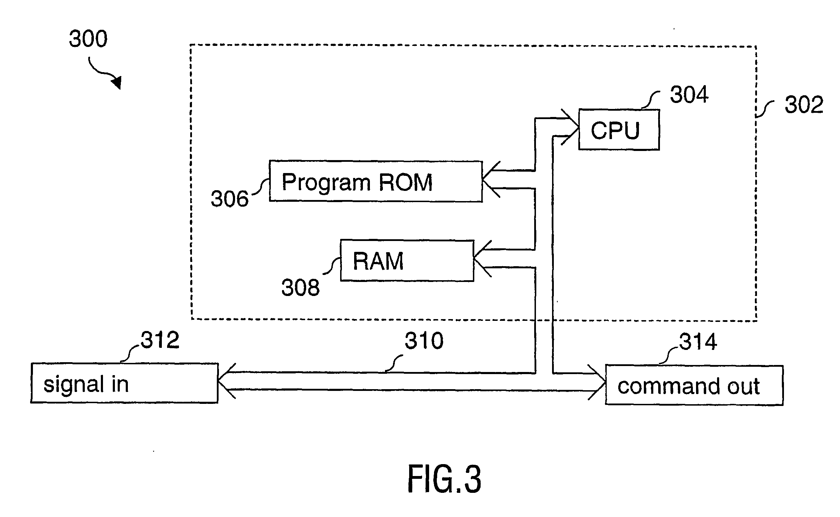

Figure 3 shows a schematic diagram of an apparatus embodying the method of Figure 2. The apparatus is shown generally at 300 and comprises a data processing unit 302 (comprising CPU 304, Program ROM 306 and RAM 308), a first port 312 operable to receive an input signal and a second port 314 operable to output a command all interconnected by means of bus 310 in known fashion. The data processing unit 302, under control of program instructions held in program ROM 306, decodes the input signal to sense an association between a source component and a destination component and the consumption, or not, of AV content from the source component by the destination component. In dependence on the sensing, the data processing unit may decide to generate one or more commands and forward these to the second port for communication to the source component. The format of the received signal and/or the sent commands may be dependent on the capabilities of the components in the system and also the location of the apparatus in the system (that is, whether the apparatus is standalone or resides within a component).

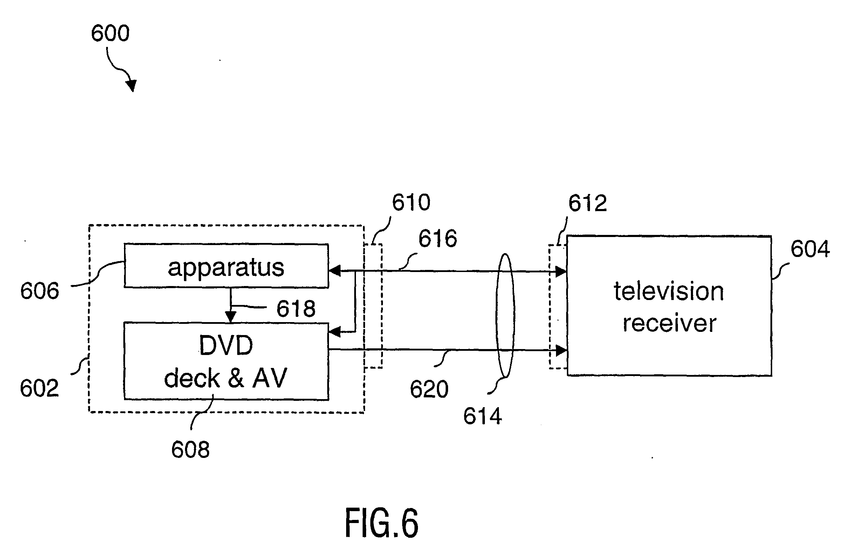

Figure 4 shows a schematic of a first system in which the method of Figure 1 can be practiced. The system is shown generally at 400 and comprises a source component 402 connected to a destination component 404. The playout of AV content from source component 402 is performed in dependence on a signal 408 generated by the destination component 404 indicating the consumption, or not, of AV content from the source component. The AV content is communicated 406 from the source component to the destination component. The system is compatible with proprietary means to implement signal 408, for example a simple binary signal to enable/disable playout from the source component. Alternatively, where the signal is conveyed using existing means, for example Project50 messages, then a source component with suitable additional decoding software may implement the method. An example implementation is discussed in relation to Figure 6 below.

Figure 5 shows a schematic of a second system, comprising the apparatus of Figure 3, in which the method of Figure 2 can be practiced. The system is shown generally at 500 and comprises a source component 502 connected to a destination component 504; an apparatus 510 is also connected to both components. A signal is generated by the destination component 504 in dependence on the consumption, or not, of AV content from the source component. The signal is communicated 508 to the apparatus 510. In dependence on the signal 508, the apparatus 510 generates and communicates one or more commands which are communicated 512 to the source component. According to the commands, the source component 502 is caused to suspend or resume playout of AV content. The AV content is communicated 506 to the destination component 504. The system as described is compatible with legacy source components, for example commands issued by the apparatus may emulate infrared remote control commands of the source component, thereby enabling control of the component in order to suspend or resume playout of AV content.

Figure 6 shows an example embodiment of the system of Figure 5 employing Project50 messaging. The system is shown generally at 600 and comprises a DVD player component 602 as depicted by the dashed outline and a TV receiver component 604. The DVD player 602 comprises an apparatus 606 and a DVD deck with associated AV circuitry 608. The two components 602 and 604 have Scart connectors 610 and 612 and are connected to each other using a conventional Scart cable 614. The apparatus 606, DVD deck & AV circuits 608 and TV Receiver 604 transfer Project50 messages using Project50 signal lines 616. The apparatus transfers commands 618 to the DVD deck. The DVD deck & AV circuits transfer AV content to the TV receiver via signal wires 620. In operation, the apparatus monitors Project50 message traffic passing between the TV 604 and the DVD deck & AV circuits 608. The apparatus decodes the messages to sense when the TV is, or is not, acting as the destination component for the DVD AV content playout. In dependence on this sensing, the apparatus issues one or more commands 618 to control the DVD deck & AV circuits 608. Alternatively, the apparatus could issue these commands by sending suitable Project50 messages to the DVD deck & AV circuits 608 via signal lines 616 (in this case, the apparatus could have a single common Project50 port for both sensing AV content consumption and the issuing of commands). In response to the commands, the DVD deck might pause or play thereby controlling the playout of AV content, which AV content is then sent over signal lines 620 to the TV receiver 604. In this example, it is shown that a suitably modified DVD player can, via Scart, cooperate with a legacy Project50 TV receiver to implement the teaching of the invention. Commercial advantages include the fact that the apparatus can be implemented by a relatively simple software upgrade to a Project50-equipped DVD player, since the player already includes all necessary hardware.

The foregoing implementations are presented by way of example only and represent a selection of a range of implementations that can readily be identified by a person skilled in the art to exploit the advantages of the present invention.

In the description above and with reference to Figure 5, a method is described for a home entertainment system 500 to control the playout of audio-visual (AV) content 506 from a source component 502 (such as a VCR or DVD player), depending on a signal 508 which indicates whether the AV content is being consumed by a destination component 504 (such as a TV or audio amplifier). The method operates without requiring any dedicated user interaction. Optionally, an apparatus 510 may interpret the signal 508 and in response generate commands 512 suitable for controlling the source component, for example by emulating infrared remote control commands. Preferably, the signal 502 and commands 512 are implemented using the Project50 protocol.

## Claims

1. A home entertainment AV system comprising a player (602) connected to a presentation device (604) by means of a SCART interconnection (614) and operable to play out AV content to said presentation device, the presentation device being operable to:
- generate (104) an AV.Link message in response to sensing a state change in consumption of said AV content by said presentation device ; and
- send (106) the AV.Link message to the player;
the player being further operable to:
- receive the AV.Link message sent from said presentation device;
- decode the received AV.Link message;
- sense, according to the decoded AV.Link message, whether the presentation device is consuming said AV content;
- generate a signal in accordance with the result of the sensing; and
- in dependence on the signal, control (108) the play out function thereby suspending or resuming playing out of AV content.

2. A system as claimed in claim 1, wherein the player is a DVD player.

## Patentansprüche

1. Heimunterhaltungs-AV-System mit einem Spieler (602), der mit einer Präsentationsanordnung (604) verbunden ist, und zwar mit Hilfe einer SCART-Verbindung (614) und betreibbar zum Abspielen n AV-Daten zu der genannten Präsentationsanordnung, wobei die Präsentationsanordnung betreibbar ist zum:
- Erzeugen (104) einer AV-Verbindungsnachricht in Reaktion auf das Zusenden einer Zustandsänderung in dem Verbrauch der genannten AV-Daten durch die genannte Präsentationsanordnung; und
- Senden (106) der AV-Verbindungsnachricht zu dem Spieler,
wobei der Spieler weiterhin betreibbar ist zum
- Empfangen der AV-Verbindungsnachricht, zugesendet von der genannten Präsentationsanordnung;
- Decodieren der empfangenen AV-Verbindungsnachricht,
- Abtasten, entsprechend der decodierten AV-Verbindungsnachricht, ob die Präsentationsanordnung die genannten AV-Daten verbraucht;
- Erzeugen eines Signals entsprechend dem Ergebnis der Abtastung, und
- in Abhängigkeit von dem Signal, Steuern (108) der Wiedergabefunktion, wodurch die Wiedergabe der AV-Daten suspendiert oder wieder aufgenommen wird.

2. System nach Anspruch 1, wobei der Spieler ein DVD-Spieler ist.

## Revendications

1. Chaîne audiovisuelle domestique comprenant un lecteur (602) connecté à un dispositif de présentation (604) au moyen d'une connexion SCART (614) et étant en mesure de jouer le contenu audiovisuel audit dispositif de présentation, le dispositif de présentation étant en mesure de :
- générer (104) un message AV.Link en réponse à la détection d'un changement d'état dans la consommation dudit dispositif de présentation; et
- envoyer (106) le message AV.Link au lecteur;
le lecteur étant en outre en mesure de :
- recevoir le message AV.Link envoyé dudit dispositif de présentation;
- décoder le message AV.Link reçu;
- détecter, selon le message AV.Link décodé, si le dispositif de présentation est en train de consommer ledit contenu audiovisuel;
- générer un signal selon le résultat de la détection; et
- en fonction du signal, commander (108) la fonction de diffusion en suspendant ou reprenant de ce fait la diffusion du contenu audiovisuel.

2. Système selon la revendication 1, dans lequel le lecteur est un lecteur DVD.
